(19) Europäisches Patentamt
European Patent Office
Office européen des brevets

(11) Veröffentlichungsnummer : **0 297 346 B1**

(12) # EUROPÄISCHE PATENTSCHRIFT

(45) Veröffentlichungstag der Patentschrift :
**06.03.91 Patentblatt 91/10**

(51) Int. Cl.$^5$ : **A01N 43/653**

(21) Anmeldenummer : **88109425.4**

(22) Anmeldetag : **14.06.88**

(54) **Verwendung von 1-(4-Chlorphenyl)-4,4-dimethyl-3-(1,2,4-triazol-l-yl-methyl)-pentan-3-ol zur Bekämpfung von Pseudocercosporella herpotrichoides.**

(30) Priorität : **25.06.87 DE 3720998**

(43) Veröffentlichungstag der Anmeldung :
**04.01.89 Patentblatt 89/01**

(45) Bekanntmachung des Hinweises auf die Patenterteilung :
**06.03.91 Patentblatt 91/10**

(84) Benannte Vertragsstaaten :
**BE CH DE FR GB IT LI NL**

(56) Entgegenhaltungen :
**EP-A- 0 040 345**
**EP-A- 0 052 424**

(73) Patentinhaber : **BAYER AG**
**W-5090 Leverkusen 1 Bayerwerk (DE)**

(72) Erfinder : **Dutzmann, Stefan, Dr.**
**Leinenweberweg 33**
**W-4000 Düsseldorf 13 (DE)**
Erfinder : **Reinecke, Paul, Dr.**
**Steinstrasse 8**
**W-5090 Leverkusen 3 (DE)**
Erfinder : **Scheinpflug, Hans, Prof. Dr.**
**Am Thelenhof 15**
**W-5090 Leverkusen 1 (DE)**

**EP 0 297 346 B1**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft die Verwendung des bekannten 1-(4-Chlorphenyl)-4,4-dimethyl-3-(1,2,4-triazol-1-yl-methyl)-pentan-3-ols zur Bekämpfung von Pseudocercosporella herpotrichoides.

Es ist bereits bekannt, daß 1-(4-Chlorphenyl)-4,4-dimethyl-3-(1,2,4-triazol-1-yl-methyl)-pentan-3-ol eine sehr gute fungizide Wirksamkeit besitzt (vgl. EP-OS 0 040 345). Eine spezielle Verwendung dieses Stoffes gegen Pseudocercosporella herpotrichoides ist jedoch bisher noch nicht beschrieben worden.

Es wurde nun gefunden, daß sich 1-(4-Chlorphenyl)-4,4-dimethyl-3-(1,2,4-triazol-1-yl-methyl)-pentan-3-ol der Formel

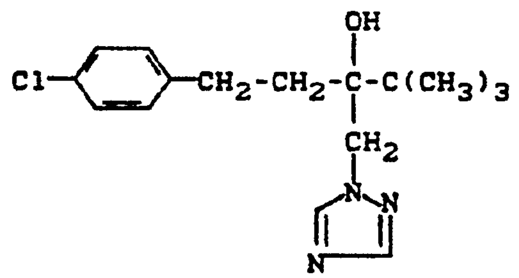

(I)

sehr gut zur Bekämpfung von Pseudocercosporella herpotrichoides verwenden läßt.

Überraschenderweise zweigt 1-(4-Chlorphenyl)-4,4-dimethyl-3-(1,2,4-triazol-1-yl-methyl)-pentan-3-ol der Formel (I) beim Einsatz gegen Pseudocercosporella herpotrichoides eine wesentlich bessere Wirksamkeit als die konstitutionell ähnlichsten vorbekannten Stoffe gleicher Wirkungsrichtung.

Der erfindungsgemäß verwendbare Wirkstoff, der durch die Formel (I) eindeutig definiert wird, ist bereits bekannt (vgl. EP-OS 0 040 345).

Der erfindungsgemäß verwendbare Stoff eignet sich hervorragend zur Bekämpfung von Pseudocercosporella herpotrichoides, den Erreger der Halmbruchkrankheit bei Getreide. Bevorzugt ist der Einsatz des erfindungsgemäß verwendbaren Stoffes bei der Bekämpfung von Pseudocercosporella herpotrichoides bei Weizen und Gerste.

Der Wirkstoff kann in die üblichen Formulierungen überführt werden, wie Lösungen, Emulsionen, Suspensionen, Pulver, Schäume, Pasten, Granulate, Aerosole, Feinstverkapselungen in polymeren Stoffen und in Hüllmassen für Saatgut, sowie ULV-Formulierungen.

Diese Formulierungen werden in bekannter Weise hergestellt, z. B. durch Vermischen des Wirkstoffes mit Streckmitteln, also flüssigen Lösungsmitteln, unter Druck stehenden verflüssigten Gasen und/oder festen Trägerstoffen, gegebenenfalls unter Verwendung von oberflächenaktiven Mitteln, also Emulgiermitteln und/oder Dispergiermitteln und/oder schaumerzeugenden Mitteln. Im Falle der Benutzung von Wasser als Streckmittel können z.B. auch organische Lösungsmittel als Hilfslösungsmittel verwendet werden. Als flüssige Lösungsmittel kommen im wesentlichen in Frage : Aromaten, wie Xylol, Toluol, oder Alkylnaphthaline, chlorierte Aromaten oder chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, Alkohole, wie Butanol oder Glycol sowie deren Ether und Ester, Ketone, wie Aceton, Methylethylketon, Methylisobutylketon oder Cyclohexanon, stark polare Lösungsmittel, wie Dimethylformamid und Dimethylsulfoxid, sowie Wasser ; mit verflüssigten gasförmigen Streckmitteln oder Trägerstoffen sind solche Flüssigkeiten gemeint, welche bei normaler Temperatur und unter Normaldruck gasförmig sind, z.B. Aerosol-Treibgase, wie Halogenkohlenwasserstoffe sowie Butan, Propan, Stickstoff und Kohlendioxid; als feste Trägerstoffe kommen in Frage : z.B. natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate ; als feste Trägerstoffe für Granulate kommen in Frage : z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnußschalen, Maiskolben und Tabakstengel ; als Emulgier- und/oder schaumerzeugende Mittel kommen in Frage : z.B. nichtionogene und anionische Emulgatoren, wie Polyoxyethylen-Fettsäure-Ester, Polyoxyethylen-Fettalkohol-Ether, z.B. Alkylarylpolyglykol-Ether, Alkylsulfonate, Alkylsulfate, Arylsulfonate sowie Eiweißhydrolysate ; als Dispergiermittel kommen in Frage : z.B. Lignin-Sulfitablaugen und Methylcellulose.

Es können in den Formulierungen Haftmittel wie Carboxymethylcellulose, natürliche und synthetische pulverige, körnige oder latexförmige Polymere verwendet werden, wie Gummiarabicum, Polyvinylalkohol,

Polyvinylacetat, sowie natürliche Phospholipide, wie Kephaline und Lecithine, und synthetische Phospholipide. Weitere Additive können mineralische und vegetabile Öle sein.

Es können Farbstoffe wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe wie Salze von Eisen, Mangan, Bor, Kupfer, Kobalt, Molybdän und Zink verwendet werden.

Die Formulierungen enthalten im allgemeinen zwischen 0,1 und 95 Gewichtsprozent Wirkstoff, vorzugsweise zwischen 0,5 und 90%.

Der erfindungsgemäß verwendbare Wirkstoff kann in den Formulierungen in Mischung mit anderen bekannten Wirkstoffen vorliegen wie Fungizide, Insektizide, Akarizide und Herbizide sowie Mischungen mit Düngemitteln und anderen Wachstumsregulatoren.

Der Wirkstoff kann als solcher, in Form seiner Formulierungen oder den daraus bereiteten Anwendungsformen wie gebrauchsfertige Lösungen, emulgierbare Konzentrate, Emulsionen, Schäume, Suspensionen, Spritzpulver, Pasten, lösliche Pulver, Stäubemittel und Granulate, angewendet werden. Die Anwendung geschieht in üblicher Weise, z.B. durch Gießen, Verspritzen, Versprühen, Verstreuen, Verstäuben, Verschäumen, Bestreichen usw. Es ist ferner möglich, den Wirkstoff nach dem Ultra-Low-Volume-Verfahren auszubringen oder die Wirkstoffzubereitung oder den Wirkstoff selbst in den Boden zu injizieren. Es kann auch das Saatgut der Pflanzen behandelt werden.

Bei der Behandlung von Pflanzenteilen kann die Wirkstoffkonzentration in den Anwendungsformen in einem größeren Bereich variiert werden. Sie liegt im allgemeinen zwischen 1 und 0,0001 Gew.-%, vorzugsweise zwischen 0,5 und 0,001%.

Bei der Saatgutbehandlung werden im allgemeinen Wirkstoffmengen von 0,001 bis 50 g je Kilogramm Saatgut, vorzugsweise 0,01 bis 10 g benötigt.

Bei Behandlung des Bodens sind Wirkstoffkonzentrationen von 0,00001 bis 0,1 Gew.-%, vorzugsweise von 0,0001 bis 0,02% am Wirkungsort erforderlich.

Die erfindungsgemäße Verwendung des Wirkstoffes geht aus dem folgenden Beispiel hervor.

Beispiel A

Pseudocercosporella herpotrichoides-Test (Weizen) / protektiv

Lösungsmittel : 100 Gewichtsteile Dimethylformamid
Emulgator : 0,25 Gewichtsteile Alkylarylpolyglykolether

Zur Herstellung einer zweckmäßigen Wirkstoffzubereitung vermischt man 1 Gewichtsteil Wirkstoff mit den angegebenen Mengen Lösungsmittel und Emulgator und verdünnt das Konzentrat mit Wasser auf die gewünschte Konzentration.

Zur Prüfung auf protektive Wirksamkeit besprüht man junge Pflanzen mit der Wirkstoffzubereitung taufeucht. Nach Antrocknen des Spritzbelages werden die Pflanzen an der Halmbasis mit Sporen von Pseudocercosporella herpotrichoides inokuliert.

Die Pflanzen werden in einem Gewächshaus bei einer Temperatur von ca. 10°C und einer relativen Luftfeuchtigkeit von ca. 80% aufgestellt.

21 Tage nach der Inokulation erfolgt die Auswertung.

Wirkstoffe, Wirkstoffkonzentrationen und Versuchsergebnisse gehen aus der folgenden Tabelle hervor.

**T a b e l l e   A**

Pseudocercosporella herpotrichoides-Test (Weizen) / protektiv

| Wirkstoff | Wirkstoffkonzentration in der Spritzbrühe in Gew.-% | Krankheitsbefall in % der unbehandelten Kontrolle |
|---|---|---|
| 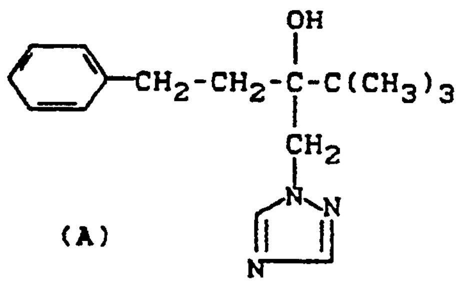 (A) | 0,025 | 62,5 |
| 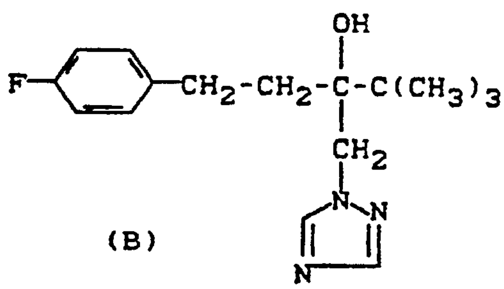 (B) | 0,025 | 75,0 |
| 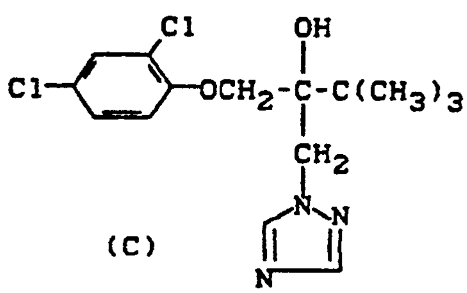 (C) | 0,025 | 75,0 |

Tabelle A (Fortsetzung)

Pseudocercosporella herpotrichoides-Test (Weizen) / protektiv

| Wirkstoff | Wirkstoffkonzentration in der Spritzbrühe in Gew.-% | Krankheitsbefall in % der unbehandelten Kontrolle |
|---|---|---|
| 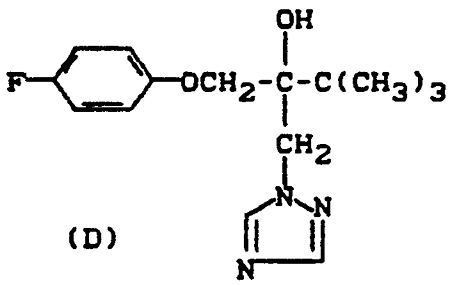 (D) | 0,025 | 90,9 |
| 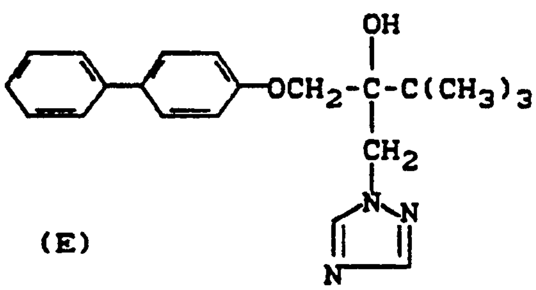 (E) | 0,025 | 87,5 |
| 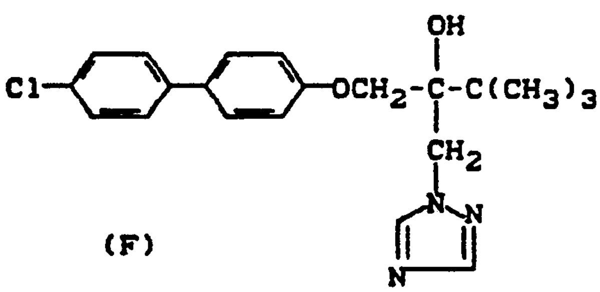 (F) | 0,025 | 87,5 |

Tabelle A (Fortsetzung)

Pseudocercosporella herpotrichoides-Test (Weizen) / protektiv

| Wirkstoff | Wirkstoffkonzentration in der Spritzbrühe in Gew.-% | Krankheitsbefall in % der unbehandelten Kontrolle |
|---|---|---|
| erfindungsgemäß: | | |
| 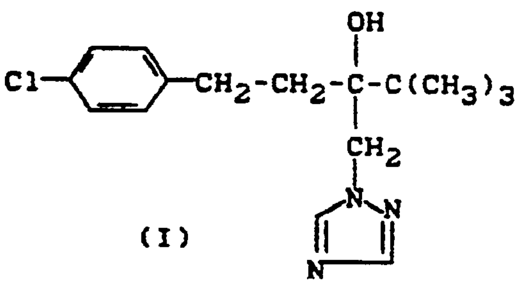 (I) | 0,025 | 27,3 |

## Ansprüche

1. Verwendung von 1-(4-Chlorphenyl)-4,4-dimethyl-3-(1,2,4-triazol-1-yl-methyl)-pentan-3-ol der Formel

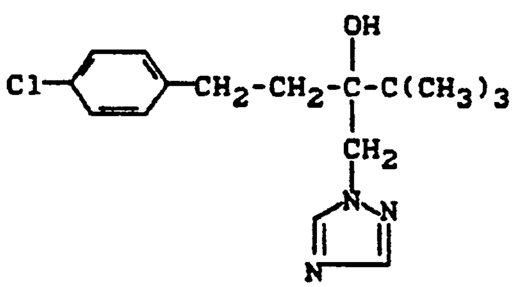

(I)

zur Bekämpfung von Pseudocercosporella herpotrichoides.

2. Verfahren zur Bekämpfung von Pseudocercosporella herpotrichoides, dadurch gekennzeichnet, daß man 1-(4-Chlorphenyl)-4,4-dimethyl-3-(1,2,4-triazol-1-yl-methyl)-pentan-3-ol der Formel (I) gemäß Anspruch 1 auf Pilze dieser Art und/oder deren Lebensraum ausbringt.

## Claims

1. Use of 1-(4-chlorophenyl)-4,4-dimethyl-3-(1,2,4triazol-1-yl-methyl)-pentan-3-ol of the formula

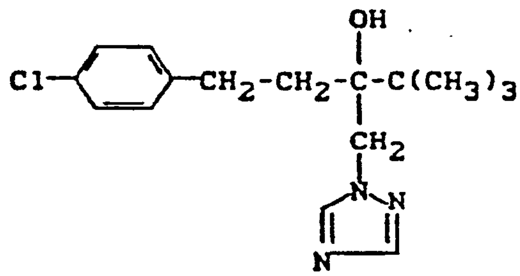

(I)

for combating Pseudocercosporella herpotrichoides.

2. Method of combating Pseudocercosporella herpotrichoides, characterised in that 1-(4-chlorophenyl)-4,4dimethyl-3-(1,2,4-triazol-1-yl-methyl)-pentan-3-ol of the formula (I) according to Claim 1 is applied to fungi of this species and/or their environment.

## Revendications

1. Utilisation du 1-(4-chlorophényl)-4,4diméthyl-3-(1,2,4-triazole-1-yl-méthyl)-pentane-3-ol de formule

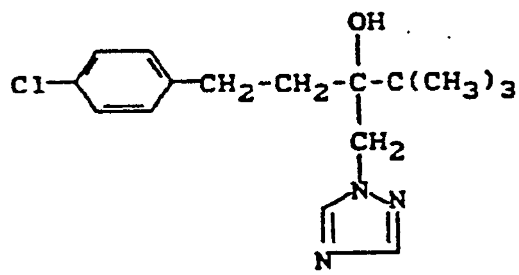

(I)

pour combattre Pseudocercosporella herpotrichoïdes.

2. Procédé pour combattre Pseudocercosporella herpotrichoïdes, caractérisé en ce qu'on applique le 1-(4chlorophényl)-4,4-diméthyl-3-(1,2,4-triazole-1-yl-méthyl)pentane-3-ol de formule (I) suivant la revendication 1 sur des champignons de cette espèce et/ou sur leur milieu.